# DEMANDE DE BREVET EUROPEEN

(11) **EP 3 489 147 A1**
(43) Date de publication de la demande: **29.05.2019**
(21) Numéro de dépôt: 18207255.3
(22) Date de dépôt: 20.11.2018
(51) Int. Cl.: B64D 27/26, B64D 27/18, B64D 27/12

(54) **ENSEMBLE POUR AERONEF COMPRENANT UNE STRUCTURE PRIMAIRE DE MAT D'ACCROCHAGE FIXEE A UN CAISSON DE VOILURE PAR DES ATTACHES PARTIELLEMENT ENTERREES DANS LA STRUCTURE PRIMAIRE**

(30) Priorité: 23.11.2017 FR 1761113
(71) Demandeur: Airbus Operations SAS, 31060 Toulouse (FR)
(72) Inventeur: PAUTIS, Olivier, 31330 MERVILLE (FR); BOUCHET, Eric, 31840 AUSSONNE (FR); BARBARA, Olivier, 81700 PUYLAURENS (FR)
(74) Mandataire: Brevalex

(57) **Abrégé**

Afin d'amener un caisson de mât (28) d'un mât d'accrochage de moteur d'aéronef au plus près d'un caisson de voilure (14), l'invention prévoit deux attaches avant latérales (42), comportant chacune :
- une chape (46) solidaire du caisson de voilure (14), la chape comprenant deux voiles (48a, 48b) dont au moins l'une traverse un longeron supérieur (30) du caisson (28) ;
- la partie supérieure (58a) l'une des deux semelles latérales opposées (58) d'une nervure transversale intérieure (36c) de renfort du caisson (28) ;
- la partie supérieure (34a) d'un panneau latéral associé (34) ; et
- un système d'axe (66) traversant la chape (46) et les deux parties supérieures (34a, 58a).

## Description

### DOMAINE TECHNIQUE

La présente invention se rapporte au domaine des aéronefs, et en particulier aux ensembles comprenant une aile d'aéronef ainsi qu'un mât d'accrochage de moteur fixé sous cette aile. L'invention concerne de préférence de tels ensembles destinés à supporter des moteurs de grands diamètres, à double flux. Un exemple de ce type d'ensemble est par exemple divulgué dans le document FR 2 887 522.

L'invention s'applique en particulier aux avions commerciaux.

### ETAT DE LA TECHNIQUE ANTERIEURE

Sur les aéronefs existants, les moteurs tels que les turboréacteurs sont suspendus en dessous de la voilure par des dispositifs d'accrochage complexes, également appelés « EMS » (de l'anglais « Engine Mounting Structure »), ou encore mât d'accrochage. Les mâts d'accrochage habituellement employés présentent une structure primaire, également dite structure rigide, souvent réalisée sous forme d'un caisson, c'est-à-dire réalisée par l'assemblage de longerons inférieur et supérieur raccordés entre eux par une pluralité de nervures transversales de renfort situées à l'intérieur du caisson et à ses extrémités. Les longerons sont agencés en faces inférieure et supérieure, tandis que des panneaux latéraux ferment le caisson en faces latérales. De plus, le mât d'accrochage est agencé en partie supérieure du moteur, entre ce dernier et le caisson de voilure. Cette position horaire est dite « à 12h ».

De façon connue, la structure primaire de ces mâts est conçue pour permettre la transmission à la voilure des efforts statiques et dynamiques engendrés par les moteurs, tels que le poids, la poussée, ou encore les différents efforts dynamiques, notamment ceux liés aux cas de défaillances tels que la perte de pâles (FBO, de l'anglais *« Fan Blade Out »*), effacement du train avant, atterrissage dynamique, etc.

Dans les mâts d'accrochage connus de l'art antérieur tel que dans le document FR 2 887 522, la transmission des efforts entre sa structure primaire et le caisson de voilure est classiquement assurée par un jeu d'attaches comprenant une attache avant, une attache arrière, ainsi qu'une attache intermédiaire, cette dernière étant notamment destinée à reprendre les efforts de poussée générés par le moteur. Ces attaches sont classiquement interposées verticalement entre le caisson de voilure et la structure primaire du mât d'accrochage.

Sur les moteurs récents, le diamètre est de plus en plus élevé. Pour les moteurs à double flux tels que les turboréacteurs, l'important taux de dilution recherché conduit à obtenir un encombrement particulièrement élevé, puisqu'une augmentation du taux de dilution engendre inéluctablement une hausse du diamètre du moteur, et plus particulièrement une hausse du diamètre de son carter de soufflante.

Par conséquent, avec une garde au sol qui est déterminée de manière à rester acceptable du point de vue sécuritaire, l'espace restant entre l'élément de voilure et le moteur s'avère de plus en plus restreint. De ce fait, il devient difficile d'implanter le mât d'accrochage ainsi que les différentes attaches voilure dans cet espace vertical restant, usuellement dédié à cette implantation. Cette difficulté est d'autant plus élevée que les efforts qui transitent sont également d'intensités élevées, et requièrent des dimensionnements appropriés pour le caisson de voilure et la structure primaire. En effet, ces derniers doivent présenter des dimensions suffisantes pour apporter une résistance mécanique capable de supporter le passage des efforts du moteur vers l'élément de voilure, avec une faible déformée sous contrainte dans le but de ne pas dégrader les performances aérodynamiques du système propulsif.

Dans l'art antérieur, de multiples solutions ont été proposées pour rapprocher le moteur au plus près de l'élément de voilure auquel il est suspendu, et ce dans le but de conserver la garde au sol requise.

Néanmoins, ces solutions doivent être améliorées en permanence pour s'adapter aux diamètres de carter de soufflante toujours plus élevés, retenus pour satisfaire les besoins en taux de dilution.

### EXPOSÉ DE L'INVENTION

Pour répondre à ce besoin d'amélioration, l'invention a pour objet un ensemble pour aéronef comprenant :
- une aile d'aéronef comprenant un caisson de voilure ;
- un mât d'accrochage de moteur agencé sous l'aile, le mât comprenant une structure primaire en forme de caisson de mât présentant un longeron supérieur s'étendant au moins en partie sous le caisson de voilure, et présentant également un longeron inférieur, deux panneaux latéraux opposés, ainsi qu'au moins une nervure transversale intérieure de renfort comprenant deux semelles latérales opposés fixées respectivement sur les deux panneaux latéraux opposés, chaque semelle latérale étant fixée sur une surface intérieure de son panneau latéral associé qui s'étend de part et d'autre de cette semelle selon une direction longitudinale (X) de l'ensemble ; et
- des moyens de fixation de la structure primaire du mât d'accrochage sur le caisson de voilure.

Selon l'invention, lesdits moyens de fixation comprennent deux attaches avant latérales, chacune de ces attaches comportant :
- une chape solidaire du caisson de voilure, la chape comprenant deux voiles dont au moins l'un traverse le longeron supérieur du caisson de mât pour se situer au moins en partie à l'intérieur de ce caisson de mât ;
- une partie supérieure du panneau latéral associé ;
- une partie supérieure de l'une des deux semelles latérales opposées de la nervure transversale intérieure de renfort ; et
- un système d'axe traversant les deux voiles de ladite chape, la partie supérieure du panneau latéral associé, ainsi que la partie supérieure de la semelle latérale.

Grâce à l'agencement proposé, la structure primaire du mât peut être approchée au plus près de l'aile, tout d'abord car une partie des attaches avant latérales se trouve implantée dans le caisson de mât, et non plus superposée verticalement à ce dernier. En outre, dans la direction longitudinale, la continuité structurale du caisson de mât n'est pas perturbée par la présence des attaches avant latérales, ce qui favorise un bon drainage des efforts dans le caisson, selon cette direction longitudinale. Egalement, du fait que les semelles latérales des attaches avant latérales soient fixées sur les panneaux latéraux du caisson de mât, la largeur de la section utile de ce caisson, au niveau de ces attaches, s'avère avantageusement élevée. Il en découle avantageusement un gain supplémentaire de masse et d'encombrement dans la direction verticale, propice à l'implantation d'un moteur de plus grand diamètre, et/ou à une implantation plus haute du moteur pour augmenter la garde au sol.

L'invention prévoit de préférence au moins l'une des caractéristiques optionnelles suivantes, prises isolément ou en combinaison.

Ladite nervure transversale intérieure de renfort est inclinée de manière à s'étendre vers le bas en allant vers l'avant.

Ladite nervure transversale intérieure de renfort est destinée à être fixée dans sa partie inférieure à une attache moteur.

Ledit longeron supérieur du caisson de mât présente une forme sensiblement plane tout le long du caisson de mât.

Ledit caisson de mât présente une section transversale de forme continue tout le long du caisson de mât, ce caisson s'étendant de part et d'autre des attaches avant latérales selon la direction longitudinale de l'ensemble, à savoir vers l'avant, et vers l'arrière au moins jusqu'à une attache arrière des moyens de fixation de la structure primaire du mât d'accrochage sur le caisson de voilure. Ainsi, le caisson de mât est exempt de rupture de section, en particulier au niveau des attaches avant latérales.

Il en est de même pour les deux panneaux latéraux du caisson de mât, qui sont chacun continus tout le long de ce caisson selon la direction longitudinale, sans cassure ni rupture.

Ledit caisson de voilure comporte un longeron avant sur lequel sont fixées deux ferrures de renfort supportant respectivement les deux chapes des attaches avant latérales.

Chacune des attaches avant latérales est conçue de façon à permettre la reprise des efforts s'exerçant selon la direction longitudinale et selon une direction verticale de l'ensemble, et l'une des deux attaches avant latérales est également de préférence conçue de façon à permettre la reprise des efforts s'exerçant selon une direction transversale de l'ensemble.

Lesdits moyens de fixation comprennent également une attache arrière fixée sur une nervure de fermeture arrière du caisson de mât, et l'attache arrière est de préférence conçue de façon à permettre uniquement la reprise des efforts s'exerçant selon une direction verticale de l'ensemble.

Lesdits moyens de fixation forment un système isostatique de reprise d'efforts.

De préférence, le voile de la chape traverse le longeron supérieur au niveau d'une découpe latérale de ce dernier, ladite découpe étant ouverte latéralement vers l'extérieur.

De préférence, la partie supérieure de chaque semelle latérale prend la forme d'une oreille.

De préférence, ladite partie supérieure du panneau latéral associé, ainsi que ladite partie supérieure de l'une des deux semelles latérales opposées de la nervure transversale, sont agencées entre les deux voiles de la chape.

De préférence, les deux chapes, appartenant respectivement aux deux attaches avant latérales, sont intégrées au sein d'une même pièce réalisée d'un seul tenant.

Enfin, l'invention a également pour objet un aéronef comprenant au moins un tel ensemble.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue de côté d'un aéronef comprenant un ensemble selon l'invention ;
- la figure 2 est une vue de côté agrandie, montrant l'ensemble de la figure 1 portant un moteur ;
- la figure 3 est une vue en coupe de l'ensemble montré sur la figure 2, selon la ligne de coupe III-III ;
- la figure 4 est une vue en perspective d'une partie de l'ensemble montré sur les figures 2 et 3 ;
- la figure 5 est une vue en perspective similaire à celle de la figure précédente, selon un autre angle de vue ; et
- la figure 6 est une vue de côté de l'ensemble montré sur les figures précédentes, montrant schématiquement la reprise des efforts effectués par les moyens de fixation du mât sur l'aile.

### EXPOSÉ DÉTAILLÉ DE MODES DE RÉALISATION PRÉFÉRÉS

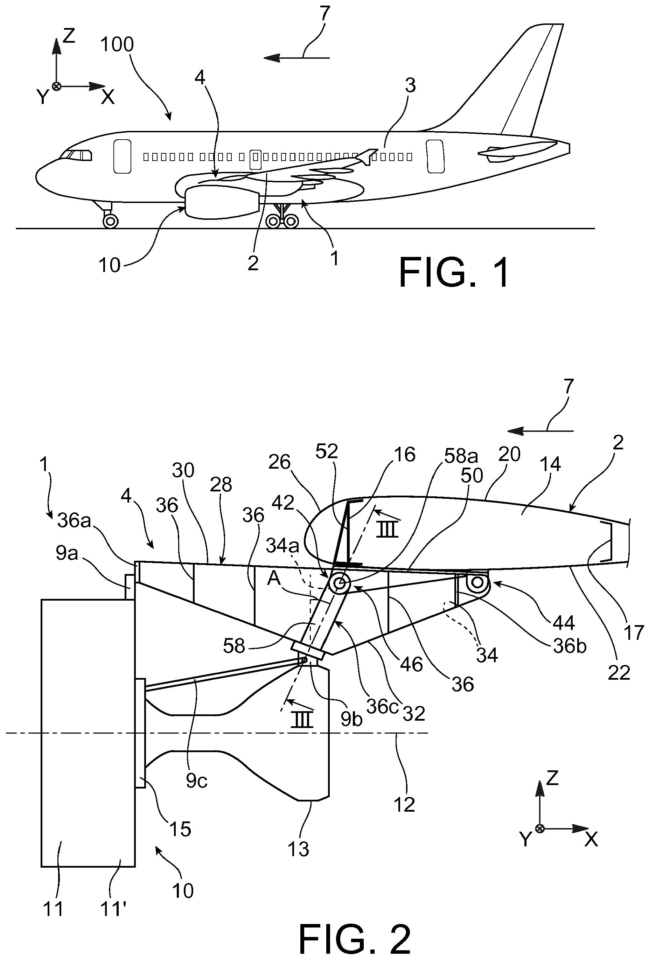

En référence à la figure 1, il est représenté un aéronef 100 comprenant un fuselage 3 sur lequel sont fixés deux ailes 2 (une seule visible sur la figure 1), chaque aile faisant partie intégrante d'un ensemble 1 selon l'invention. L'ensemble 1 supporte un moteur 10 à double flux et à double corps, tel qu'un turboréacteur à très haut taux de dilution, dit UHBR (de l'anglais « Ultra High Bypass Ratio »). L'ensemble 1 comprend non seulement l'aile 2, mais également un mât 4 d'accrochage du moteur 10 interposé entre l'aile 2 et ce moteur.

Dans toute la description qui va suivre, par convention, la direction X correspond à la direction longitudinale de l'ensemble 1 qui est également assimilable à la direction longitudinale du moteur 10, cette direction X étant parallèle à un axe longitudinal de ce moteur. D'autre part, la direction Y correspond à la direction orientée transversalement par rapport à l'ensemble 1, également assimilable à la direction transversale du moteur. Enfin, la direction Z correspond à la direction verticale ou de la hauteur, ces trois directions X, Y et Z étant orthogonales entre elles. Par conséquent, le moteur 10 est suspendu sous l'ensemble 1, dans la direction Z.

D'autre part, les termes « avant » et « arrière » sont à considérer par rapport à une direction d'avancement de l'aéronef rencontrée suite à la poussée exercée par les moteurs 10, cette direction étant représentée schématiquement par la flèche 7.

En référence à présent à la figure 2, il est représenté l'ensemble 1 sous lequel est suspendu le moteur 10, d'axe longitudinal 12. L'aile 2 de cet ensemble 1 présente une conception classique en ce sens qu'elle comporte un caisson de voilure 14 s'étendant selon une direction d'envergure de l'aile. Le caisson de voilure 14 est formé par un longeron avant 16, un longeron arrière 17, une peau supérieure d'extrados 20 ainsi qu'une peau inférieure d'intrados 22. Les deux longerons 16, 17 sont de préférence sensiblement parallèles, s'étendant selon la direction d'envergure et espacés les uns des autres selon une direction de la corde de l'aile. Des nervures intérieures de renfort sensiblement longitudinales (non représentées) peuvent être logées à l'intérieur du caisson de voilure 14, en étant fixés à chacun des quatre éléments de caisson 16, 17, 20, 22, par rivets, boulons ou éléments similaires. En outre, à l'avant du caisson de voilure 14, l'aile 2 comporte un capotage 26 formant le bord d'attaque de l'aile.

L'autre élément de l'ensemble 1, le mât d'accrochage 4, comprend une structure primaire 28 en forme de caisson. Les autres éléments constitutifs non-représentés de ce mât 4, du type structure secondaire assurant la ségrégation et le maintien des systèmes tout en supportant des carénages aérodynamiques, sont des éléments classiques similaires à ceux rencontrés dans l'art antérieur. Par conséquent, il n'en sera fait aucune description détaillée.

La structure primaire 28, ou structure rigide, permet la transmission au caisson de voilure 14 des efforts statiques et dynamiques engendrés par le moteur 10. Le caisson formé par cette structure primaire 28 s'étend sur toute la longueur de cette structure primaire, selon la direction X. Il présente une conception classique, à savoir qu'il est délimité vers le haut par un longeron supérieur 30, vers le bas par un longeron inférieur 32, et latéralement par des panneaux latéraux 34. Comme cela est visible sur la figure 2, le longeron supérieur 30 se situe au moins en partie sous le caisson de voilure 14. A cet égard, il est noté que chacun des éléments précités 30, 32, 34 peut être réalisé d'une seule pièce, ou par l'assemblage de plusieurs pièces distinctes. De plus, une même pièce peut constituer tout ou partie de plusieurs de ces éléments 30, 32, 34. L'une des particularités de la structure primaire, ci-après dénommée caisson de mât 28, réside dans la forme sensiblement plane du longeron supérieur 30 tout le long de ce caisson selon la direction X. Cela confère une simplification du caisson de mât 28, et permet un meilleur drainage des efforts dans la direction X au sein de ce caisson.

En outre, le caisson de mât 28 est équipé de nervures transversales de renfort, pour certaines agencées sensiblement dans des plans YZ et réparties selon la direction X. Il s'agit de nervures transversales intérieures 36, d'une nervure transversale de renfort 36b fermant l'arrière du caisson de mât 28, dite nervure de fermeture arrière, ainsi que d'une nervure transversale de renfort 36a fermant l'avant du caisson, dite nervure de fermeture avant. Les nervures 36, 36a, 36b relient entre eux les éléments extérieurs du caisson 30, 32, 34. Une autre nervure transversale de renfort 36c spécifique à l'invention est présente à l'intérieur du caisson de mât. Cette nervure 36c fait partie intégrante des attaches avant latérales 42, et relie mécaniquement ces attaches voilure 42 à l'attache moteur arrière qui sera décrite ci-après. Contrairement aux autres nervures, la nervure 36c s'étend vers le bas en allant vers l'avant, tout en restant de préférence parallèle à la direction Y. L'angle A qu'elle définit avec la direction Z est par exemple compris entre 20 et 60°.

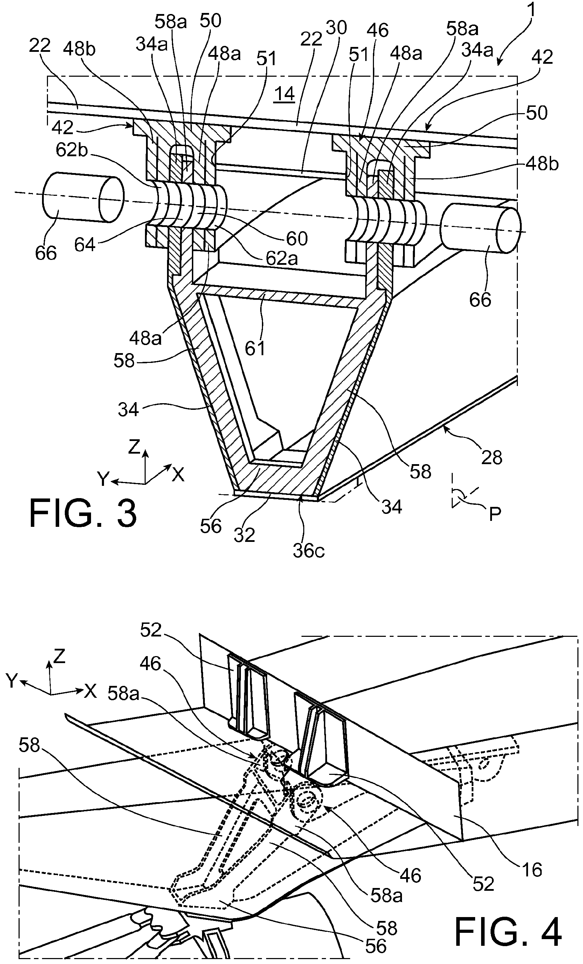

Le caisson de mât 28 présente une section transversale YZ en forme générale de carrée, de rectangle ou de parallélogramme qui se prolonge vers le bas sous la forme d'un trapèze, comme cela est visible sur la figure 3 qui sera décrite ci-après. La section transversale est évolutive le long de la direction X, mais elle reste néanmoins de forme continue tout le long du caisson de mât 28, ce qui permet un meilleur drainage des efforts au sein de ce caisson. En d'autres termes, la section transversale ne subit pas de rupture brusque de forme le long du caisson de mât 28. De préférence, cette section transversale se rétrécit progressivement à partir d'une portion médiane du caisson intégrant la nervure 36c, en allant vers l'avant et vers l'arrière.

La fixation du moteur 10 sur le caisson de mât 28 s'effectue d'une manière conventionnelle, qui va à présent être brièvement détaillée. Il est prévu une attache moteur avant 9a, reliant la nervure de fermeture avant 36a à un carter de soufflante 11 du moteur, ou bien à une virole extérieure 11' de carter intermédiaire. Il est également prévu une attache moteur arrière 9b reliant un carter d'éjection des gaz 13 du moteur, à une partie basse du caisson de mât 28. De préférence, le corps de l'attache moteur arrière 9b est fixé sur le longeron inférieur 32 ainsi que sur une extrémité basse de la nervure transversale intérieure de renfort 36c, pour favoriser un chemin d'efforts plus direct entre le moteur et l'aile. De plus, les deux attaches moteur 9a, 9b sont complétées par deux bielles classiques de reprise des efforts de poussée 9c, qui relient une base 15 du carter intermédiaire au corps de l'attache moteur arrière 9b.

Ces attaches moteur 9a, 9b, 9c sont réalisées de manière classique, connue de l'homme du métier. Elles forment ensemble un système isostatique de reprise d'efforts, tout comme les moyens de fixation du caisson de mât 28 sur le caisson de voilure 14, qui sont spécifiques à l'invention et qui vont maintenant être décrits en référence aux figures 2 à 5.

Ces moyens de fixation sont ici constitués par deux attaches avant latérales 42, et une attache arrière 44.

Les deux attaches avant latérales 42 sont de conception identique ou analogue, et agencées sensiblement symétriquement par rapport à un plan médian XZ de l'ensemble 1, ce plan étant référencé « P » sur la figure 3. De ce fait, seule l'une des deux attaches avant latérales 42 va à présent être décrite.

L'attache avant latérale 42 comporte tout d'abord une chape 46 solidaire du caisson de voilure 14. Cette chape 46 est fixée sous la peau inférieure d'intrados 22, par des moyens conventionnels du type boulons ou rivets. Elle comporte deux voiles parallèles 48a, 48b, chacun de ces voiles pouvant être doublé de manière à assurer une fonction de sécurité en cas de défaillance, cette fonction étant communément dénommée « Fail Safe ». Chaque voile 48a, 48b s'inscrit dans un plan XZ, et s'étend vers l'arrière jusqu'à sensiblement la mi-longueur du caisson de voilure 14. La semelle 50 de la chape 46 est non seulement fixée sur la surface extérieure de la peau inférieure d'intrados 22, mais également sur une ferrure de renfort 52 portée par le longeron avant 16 du caisson de voilure. Cette ferrure 52 prend sensiblement la forme d'une équerre et est logée au moins en partie dans la zone de bord d'attaque de l'aile délimitée par le capotage 26. Ce sont donc deux ferrures 52 en forme d'équerre qui sont espacées l'une de l'autre le long du longeron avant 16 du caisson de voilure.

Le voile 48b, correspondant au voile externe de la chape, se trouve de préférence en dehors du caisson de mât 28, en regard ou plaquée contre une surface extérieure du panneau latéral 34 associé à l'attache considérée. L'autre voile 48a, correspondant au voile interne de la chape, traverse le longeron supérieur 30 du caisson de mât pour se trouver au moins en partie logé à l'intérieur de ce caisson 28. Ce voile 48a est alors dit « enterré » dans le caisson de mât 28, ce qui permet de réduire l'encombrement vertical de l'ensemble 1. A cet égard, il est noté que le voile 48a pourrait traverser le longeron supérieur 30 au niveau d'une ouverture de ce dernier, ouverture qui serait alors définie par une ligne fermée. Cependant, dans le mode de réalisation décrit et représenté, le voile 48a traverse une découpe latérale 51 de ce longeron supérieur 30, cette découpe latérale étant ouverte latéralement vers l'extérieur. Les deux découpes latérales 51 agencées de part et d'autre du longeron 30 conduisent à un rétrécissement de largeur de ce longeron, au niveau des attaches avant latérales 42.

A titre indicatif, il est noté que les deux chapes 46 peuvent être intégrées au sein d'une même pièce réalisée d'un seul tenant, et dont la base fixée sur la peau inférieure d'intrados 22 forme les deux semelles 50 des deux chapes 46.

Par ailleurs, l'attache avant latérale 42 comporte également une portion de la nervure transversale intérieure de renfort 36c, comme cela va être explicité ci-après. La nervure 36c comporte en effet une semelle inférieure 56 fixée sur le longeron inférieur 32, ainsi que deux semelles latérales opposés 58 fixées respectivement sur les deux panneaux latéraux opposés 34. Plus précisément, chaque semelle 58 latérale est fixée et plaquée sur une surface intérieure de son panneau latéral associé 34. La semelle 58 est sensiblement parallèle localement à son panneau latéral associé 34, qui s'étend de manière continue de part et d'autre de cette semelle selon la direction X, pour l'obtention d'un meilleur drainage des efforts traversant le caisson 28.

Une âme transversale 61 relie les deux semelles latérales 58, en traversant l'intérieur du caisson selon la direction Y. La partie supérieure 58a de chaque semelle latérale 58 présente une forme d'oreille, agencée en saillie vers le haut à partir de l'âme transversale 61. Cette partie supérieure 58a est traversée par un orifice de passage 60 qui est aligné transversalement avec les orifices 62a, 62b des deux voiles de chape 48a, 48b, et avec un orifice 64 du panneau latéral associé 34.

Par conséquent, l'attache avant latérale 42 comporte également la partie supérieure 58a de l'une des deux semelles latérales 58 de la nervure 36c, formant l'extrémité haute de cette semelle pourvue de l'orifice de passage 60. Cette partie supérieure 58a de la semelle est ainsi également enterrée dans le caisson.

L'attache avant latérale 42 comporte également une partie supérieure 34a du panneau latéral 34, à savoir la partie de ce panneau 34 qui est plaquée contre la partie supérieure 58a de la semelle correspondante.

Comme cela est le mieux visible sur la figure 3, la partie supérieure 34a du panneau latéral ainsi que la partie supérieure 58a de la semelle associée 58 sont préférentiellement agencées entre les deux voiles 48a, 48b de la chape 46, conférant un caractère dit « femelle » à cette dernière. Il convient de noter que les deux parties supérieures 34a, 58a, de préférence plaquées latéralement l'une contre l'autre, forment ensemble un seul et même chemin d'efforts. La redondance assure une fonction de sécurité « Fail Safe » en cas de défaillance de l'un des deux éléments 34a, 58a, sans risque de propagation du dommage entre ces deux mêmes éléments.

L'attache 42 est enfin complétée par un système d'axe 66 orienté transversalement et qui traverse successivement chacun des orifices 62a, 64, 60, 62b, dont les diamètres sont sensiblement identiques. Le système d'axe 66 remplit la fonction de pion de cisaillement, et peut être doublé afin de répondre aux critères de sécurité « Fail Safe ».

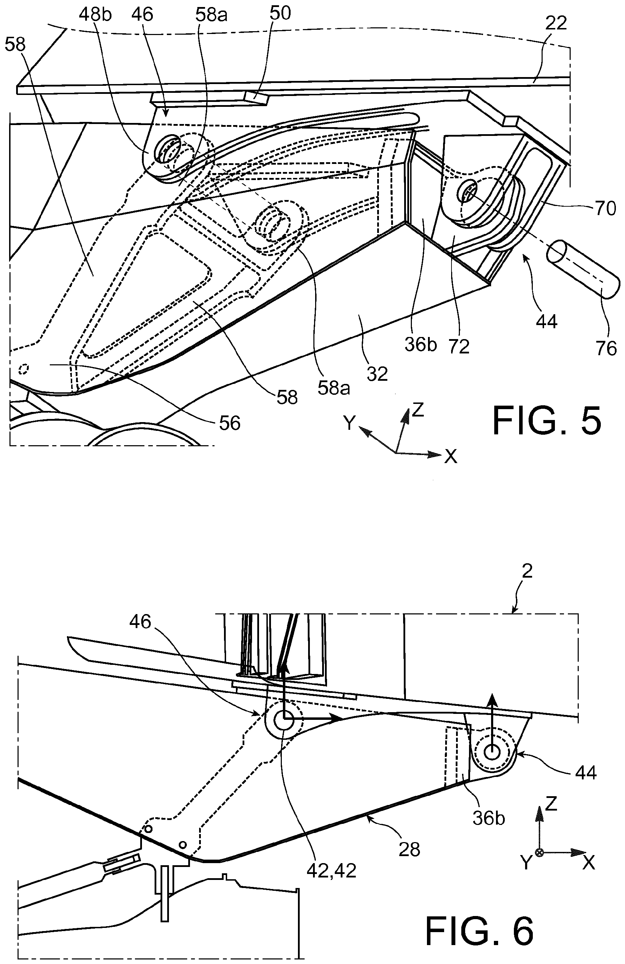

En référence plus spécifiquement à la figure 5, il est montré l'attache arrière 44, qui comporte une chape 70 solidaire de la peau inférieure d'intrados 22 du caisson de voilure. Ici encore, il est noté que cette chape arrière 70 peut être intégrée à la pièce unique formant les deux chapes 46 des attaches avant latérales 42. De plus, l'attache arrière 44 comprend une ferrure 72 solidaire de la nervure de fermeture arrière 36b du caisson de mât 28. La nervure 36b et la ferrure 72 peuvent chacune être doublée pour répondre aux critères de sécurité « Fail Safe ». De plus, un système d'axe 76 orienté selon la direction Y traverse la chape 70 et la ferrure 72.

En référence à présent à la figure 6, il va être décrit la manière dont les efforts sont repris à l'aide des moyens de fixation isostatiques qui ont été précédemment décrits, et qui permettent un assemblage simplifié du caisson de mât 28 sur l'aile 2. Chacune des deux attaches avant 42 est prévue pour permettre la reprise des efforts s'exerçant selon les deux directions X et Z, et l'une d'elles assure également la reprise des efforts selon la direction Z. L'autre de ces deux attaches avant latérales 42 ne reprend pas les efforts orientés transversalement en conditions normales de fonctionnement, mais seulement en cas de défaillance de l'attache 42 assurant la reprise des efforts selon les trois directions X, Y et Z. L'attache arrière 44 est quant à elle conçue pour assurer la reprise des efforts uniquement selon la direction Z.

Bien entendu, diverses modifications peuvent être apportées par l'homme du métier à l'invention qui vient d'être décrite, uniquement à titre d'exemples non limitatifs, et dont la portée est définie par les revendications annexées.

## Revendications

1. Ensemble (1) pour aéronef comprenant :
- une aile d'aéronef (2) comprenant un caisson de voilure (14) ;
- un mât (4) d'accrochage de moteur agencé sous l'aile (2), le mât comprenant une structure primaire en forme de caisson de mât (28) présentant un longeron supérieur (30) s'étendant au moins en partie sous le caisson de voilure (14), et présentant également un longeron inférieur (32), deux panneaux latéraux opposés (34), ainsi qu'au moins une nervure transversale intérieure de renfort (36c) comprenant deux semelles latérales opposés (58) fixées respectivement sur les deux panneaux latéraux opposés (34), chaque semelle latérale (58) étant fixée sur une surface intérieure de son panneau latéral associé (34) qui s'étend de part et d'autre de cette semelle selon une direction longitudinale (X) de l'ensemble ; et
- des moyens de fixation (40, 42) de la structure primaire (28) du mât d'accrochage sur le caisson de voilure (14),
**caractérisé en ce que** lesdits moyens de fixation comprennent deux attaches avant latérales (42), chacune de ces attaches comportant :
- une chape (46) solidaire du caisson de voilure (14), la chape comprenant deux voiles (48a, 48b) dont au moins l'un (48a) traverse le longeron supérieur (30) du caisson de mât (28) pour se situer au moins en partie à l'intérieur de ce caisson de mât ;
- une partie supérieure (34a) du panneau latéral associé (34) ;
- une partie supérieure (58a) de l'une des deux semelles latérales opposées (58) de la nervure transversale intérieure de renfort (36c) ; et
- un système d'axe (66) traversant les deux voiles (48a, 48b) de ladite chape (46), la partie supérieure (34a) du panneau latéral associé (34), ainsi que la partie supérieure (58a) de la semelle latérale (58).

2. Ensemble selon la revendication 1, **caractérisé en ce que** ladite nervure transversale intérieure de renfort (36c) est inclinée de manière à s'étendre vers le bas en allant vers l'avant.

3. Ensemble selon la revendication 1 ou la revendication 2, **caractérisé en ce que** ladite nervure transversale intérieure de renfort (36c) est destinée à être fixée dans sa partie inférieure à une attache moteur (9b).

4. Ensemble selon l'une quelconque des revendications précédentes, **caractérisé en ce que** ledit longeron supérieur (30) du caisson de mât (28) présente une forme sensiblement plane tout le long du caisson de mât.

5. Ensemble selon l'une quelconque des revendications précédentes, **caractérisé en ce que** ledit caisson de mât (28) présente une section transversale de forme continue tout le long du caisson de mât.

6. Ensemble selon l'une quelconque des revendications précédentes, **caractérisé en ce que** ledit caisson de voilure (14) comporte un longeron avant (16) sur lequel sont fixées deux ferrures de renfort (52) supportant respectivement les deux chapes (46) des attaches avant latérales (42).

7. Ensemble selon l'une quelconque des revendications précédentes, **caractérisé en ce que** chacune des attaches avant latérales (42) est conçue de façon à permettre la reprise des efforts s'exerçant selon la direction longitudinale (X) et selon une direction verticale (Z) de l'ensemble, et **en ce que** l'une des deux attaches avant latérales (42) est également de préférence conçue de façon à permettre la reprise des efforts s'exerçant selon une direction transversale (Y) de l'ensemble.

8. Ensemble selon l'une quelconque des revendications précédentes, **caractérisé en ce que** lesdits moyens de fixation comprennent également une attache arrière (44) fixée sur une nervure de fermeture arrière (36b) du caisson de mât (28), et **en ce que** l'attache arrière (44) est de préférence conçue de façon à permettre uniquement la reprise des efforts s'exerçant selon une direction verticale (Z) de l'ensemble.

9. Ensemble selon l'une quelconque des revendications précédentes, **caractérisé en ce que** lesdits moyens de fixation forment un système isostatique de reprise d'efforts.

10. Ensemble selon l'une quelconque des revendications précédentes, **caractérisé en ce que** le voile (48a) traverse le longeron supérieur (30) au niveau d'une découpe latérale (51) de ce dernier, ladite découpe étant ouverte latéralement vers l'extérieur.

11. Ensemble selon l'une quelconque des revendications précédentes, **caractérisé en ce que** la partie supérieure (58a) de chaque semelle latérale (58) prend la forme d'une oreille.

12. Ensemble selon l'une quelconque des revendications précédentes, **caractérisé en ce que** ladite partie supérieure (34a) du panneau latéral associé (34), ainsi que ladite partie supérieure (58a) de l'une des deux semelles latérales opposées (58) de la nervure transversale, sont agencées entre les deux voiles (48a, 48b) de la chape (46).

13. Ensemble selon l'une quelconque des revendications précédentes, **caractérisé en ce que** les deux chapes (46), appartenant respectivement aux deux attaches avant latérales (42), sont intégrées au sein d'une même pièce réalisée d'un seul tenant.

14. Aéronef (100) comprenant au moins un ensemble (1) selon l'une quelconque des revendications précédentes.
